Europäisches Patentamt

European Patent Office

Office européen des brevets

(11) Numéro de publication: **0 230 331 B1**

# FASCICULE DE BREVET EUROPEEN

(45) Date de publication de fascicule du brevet:
27.12.91

(51) Int. Cl.⁵: **A23N 5/00, A23N 7/02,** A47J 17/18

(21) Numéro de dépôt: 87200025.2

(22) Date de dépôt: 09.01.87

(54) **Machine pour l'épluchage de denrées, notamment pour l'écalage de noix.**

(30) Priorité: 22.01.86 FR 8600888

(43) Date de publication de la demande:
29.07.87 Bulletin 87/31

(45) Mention de la délivrance du brevet:
27.12.91 Bulletin 91/52

(84) Etats contractants désignés:
AT CH DE ES FR GB GR IT LI

(56) Documents cités:
DE-B- 1 241 950
FR-A- 1 116 013
FR-A- 2 558 690
US-A- 3 762 308

(73) Titulaire: Latreyte, Suzanne
5 avenue de Villeneuve Saint Sylvestre sur Lot
F-47140 Penne d'Agenais(FR)

(72) Inventeur: Latreyte, Suzanne
5 avenue de Villeneuve Saint Sylvestre sur Lot
F-47140 Penne d'Agenais(FR)

(74) Mandataire: Barre, Philippe
Cabinet Barre-Gatti-Laforgue 95 rue des Amidonniers
F-31069 Toulouse Cédex(FR)

EP 0 230 331 B1

# Description

L'invention concerne une machine pour le traitement de denrées, telles que produits agricoles, en vue de réaliser leur épluchage. Elle s'applique tout particulièrement à l'écalage des noix, mais peut également être utilisée pour l'épluchage d'autres denrées : fruits (coings, kiwis, oranges...), tubercules (pommes de terre, carottes..).

L'invention vise une machine du type dans lequel l'épluchage s'effectue par rognage en présence d'eau.

Les machines d'épluchage en présence d'eau existant à l'heure actuelle ont généralement une structure du type de celle décrite dans la demande de brevet français du 24 janvier 1984 publiée sous le n° 2 558 690. Ces machines comprennent une cuve dans laquelle débouche une buse d'arrosage et qui est tapissée d'un garnissage abrasif ; un disque rotatif met en mouvement les denrées et les amène à heurter la paroi abrasive de la cuve, ce qui provoque un enlèvement de matière. Dans certaines machines, le garnissage abrasif de la paroi cylindrique est remplacé par des brosses à poils rigides.

Toutefois, de telles machines ont une efficacité médiocre, en particulier dans l'application à l'écalage des noix. Ainsi, les durées de traitement sont longues (plusieurs dizaines de minutes), et des morceaux de coques demeurent souvent attachés aux denrées, nécessitant généralement un deuxième passage. De plus, ces machines se chargent peu à peu de déchets et doivent être lavées fréquemment sous peine de voir diminuer encore leur efficacité. En outre, ces machines consomment d'importantes quantités d'eau et rejettent donc des quantités importantes d'effluents. Il est à noter, au surplus, que ces machines ont tendance à donner lieu à d'importantes projections d'eau, ce qui nécessite la fermeture de leur cuve en partie haute et complique les opérations de chargement en denrées.

La présente invention se propose de fournir une machine perfectionnée du type opérant l'épluchage par rognage en présence d'eau.

Un objectif essentiel de l'invention est de fournir une machine bénéficiant d'une efficacité considérablement accrue par rapport aux machines connues.

Un autre objectif est de fournir une machine peu sensible au colmatage.

Un autre objectif est de réduire notablement les quantités d'eau consommées.

Un autre objectif est de fournir une machine dont la face supérieure puisse rester ouverte de façon à faciliter le chargement des denrées.

(Dans la suite, les termes visant un positionnement dans l'espace tels que "haut", "bas"..., se réfèrent à la position normale de la machine en cours de fonctionnement)

La machine visée par l'invention comprend une cuve, un disque rotatif disposé vers le fond de celle-ci, des moyens d'entraînement en rotation du disque, des moyens de distribution de liquide dans la cuve, des moyens de récupération des denrées traitées et des moyens d'évacuation des déchets et du liquide comprenant un passage ménagé à la périphérie du disque entre celui-ci et la cuve. Selon la présente invention :

- les moyens de distribution de liquide comprennent un distributeur, assujetti au centre du disque de façon à tourner avec celui-ci, ce distributeur étant relié à un conduit d'arrivée de liquide au moyen d'un joint hydraulique tournant, et étant doté d'orifices agencés pour projeter le liquide au niveau du disque dans le sens centrifuge,
- le disque rotatif est hérissé d'une pluralité de dents faisant saillie par rapport audit disque et ajustables en hauteur au-dessus de celui-ci.

Ainsi, dans la machine de l'invention, la structure dentée du disque rotatif et le flux d'eau projeté tangentiellement par rapport à celui-ci coopèrent pour conditionner un fonctionnement original, consistant à opérer l'enlèvement de matière en présence d'eau uniquement au niveau du disque, et à accélérer le mouvement et le brassage des denrées dans les zones supérieures de la cuve. Les expérimentations ont montré que les performances de la machine sont considérablement accrues par rapport aux machines connues, tant sur le plan des durées de traitement nécessaires que sur celui de la qualité de l'épluchage (qui est intégral). Par example, une machine ayant une cuve d'environ 57 cm de diamètre et 65 cm de hauteur est apte à écaler de façon intégrale 40 kilos de noix en une minute, alors que les meilleures machines connues de dimensions analogues mettent 12 minutes pour traiter la même quantité. En outre, les consommations d'eau dans la machine de l'invention sont réduites dans un rapport de 1 à 13, en comparaison aux machines connues.

De plus, les dents qui hérissent le disque rotatif sont, de préférence, agencées à travers des lumières du disque en position ajustable en hauteur, ces dents étant portées par des moyens de réglage, fixés au-dessous du disque et adaptés pour permettre de régler en hauteur la saillie que forment lesdites dents au-dessus dudit disque. L'invention permet ainsi d'ajuster le pouvoir de rognage des dents en fonction de la nature ou de l'état des denrées à traiter.

Selon une autre caractéristique de l'invention, les moyens d'évacuation des déchets et du liquide comprennent, au moins, une bague circulaire disposée dans le passage ménagé entre cuve et disque, de façon à diviser ce passage en au moins deux fractions, chacune d'épaisseur inférieure à la dimension des denrées à traiter. Comme on le verra plus loin, ces dispositions facilitent l'évacuation des déchets, tout en permettant d'accroître le brassage des denrées.

L'invention ayant été ci-dessus exposée dans sa forme générale, d'autres caractéristique, buts et avantages ressortiront de la description qui suit en référence aux dessins annexés qui en présentent, à titre d'exemples non limitatifs, un mode de réalisation et des variantes ; sur ces dessins :

- la figure 1 est une coupe par un plan vertical axial d'une machine conforme à l'invention,
- la figure 2 en est une coupe partielle de détail au niveau du disque rotatif,
- la figure 3 est une vue schématique en perspective d'un des organes de ladite machine,
- la figure 4 est une vue en plan de celle-ci,
- les figures 5 et 6 sont des vues schématiques partielles de variantes.

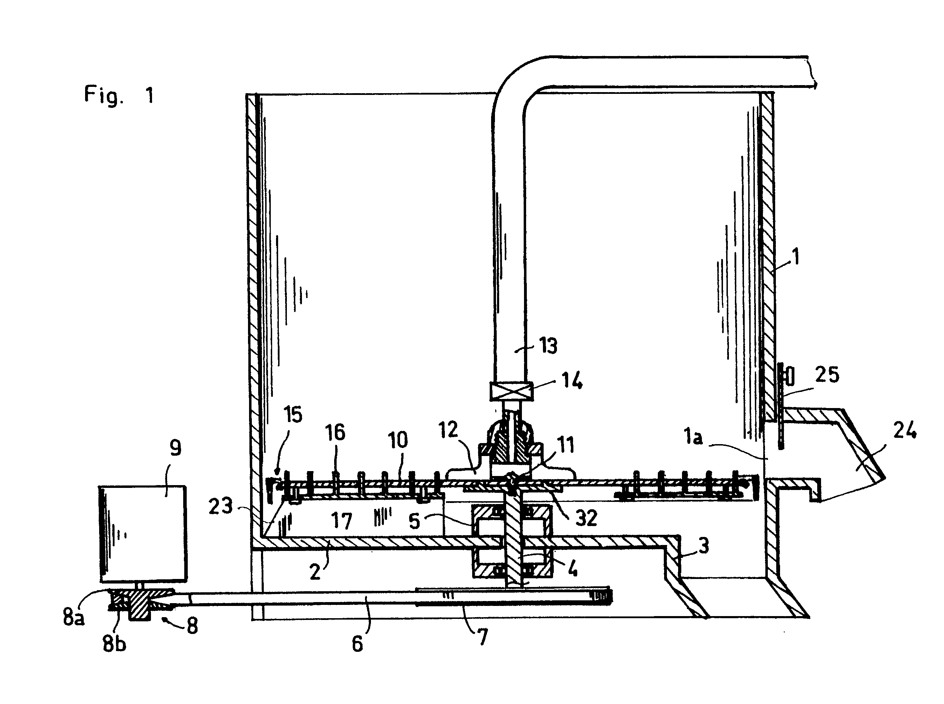

La machine représentée à titre d'exemple aux figures 1 à 4 et plus particulièrement destinée à l'écalage des noix. Elle comprend une cuve cylindrique 1 dont la paroi cylindrique est lisse. Cette paroi comporte une ouverture la se prolongeant extérieurement par une goulotte 24 de sortie des denrées. Une porte coulissante 25 montée sur la cuve permet d'obturer l'ouverture la.

La cuve 1 est dotée d'un fond 2 qui s'étend sur toute la section de celle-ci et est percé, sur un côté, d'une ouverture au-dessous de laquelle s'échappe une goulotte 3 d'évacuation de déchets et liquide.

En l'exemple, le fond 2 est plan et soutient un arbre vertical axial 4 par l'entremise de roulements à billes étanches symbolisés en 5.

L'arbre 4 peut être entraîné en rotation par des moyens moteurs, constitués en l'exemple par une courroie trapézoïdale 6 en prise dans les gorges de deux poulies, l'une 7 montée sur l'arbre 4, l'autre 8 montée sur l'arbre de sortie d'un moteur électrique 9. Dans l'application décrite en exemple, le moteur 9 et les moyens de transmission 6, 7, 8 sont adaptés pour pouvoir entraîner l'arbre 4 à une vitesse de rotation comprise entre 250 et 400 tours par minute. Dans cette plage, la vitesse peut être ajustée de façon optimale par un réglage de la poulie 8.

A cet effet, cette dernière est composée d'une joue fixe 8a solidaire du moyeu de poulie, et d'une joue mobile 8b qui peut se visser sur le moyeu pour être plus ou moins écartée de la joue mobile. Une clavette est prévue pour verrouiller la joue mobile dans la position choisie. Il est ainsi possible de faire varier le rapport de démultiplication de la transmission.

Par ailleurs, l'arbre 4 est solidaire, à l'opposé de la poulie 7, d'un plateau 32 s'étendant au centre de la cuve dans un plan horizontal. Sur ce plateau est assemblé un disque rotatif 10, disposé en appui au-dessus dudit plateau, de sorte que la face supérieure dudit disque soit sensiblement au même niveau que l'arête basse de l'ouverture 1a de la cuve. Des ergots 32a du plateau pénètrent dans des trous conjugués du disque 10 afin d'écarter toute possibilité de rotation relative de ces éléments.

En l'exemple, l'assemblage est réalisé au moyen d'une vis 11 qui est vissée dans l'arbre 4 et, à l'opposé, est solidaire d'un distributeur de liquide 12 qui forme la tête de la vis 11.

Le disque 10 se trouve ainsi pincé entre le plateau 32 et le distributeur 12 (qui bien entendu tourne avec l'ensemble). Ce distributeur reçoit un débit de liquide (eau) d'un conduit fixe d'arrivée 13 par l'entremise d'un joint tournant hydraulique de type classique symbolisé en 14 à la figure 1. La sortie mobile 14a du joint tournant est assujetti sur le distributeur 12 au moyen d'un embout de connexion 14b et d'un écrou 15. Le conduit d'arrivée 13 s'échappe vers le haut selon l'axe de la cuve.

Le distributeur 12 comporte des orifices de distribution, en l'exemple au nombre de deux diamétralement opposés tels que 12a, qui sont situés au-dessus du disque à proximité immédiate de la surface supérieure de celui-ci, afin de projeter le liquide au niveau du disque 10 dans le sens centrifuge.

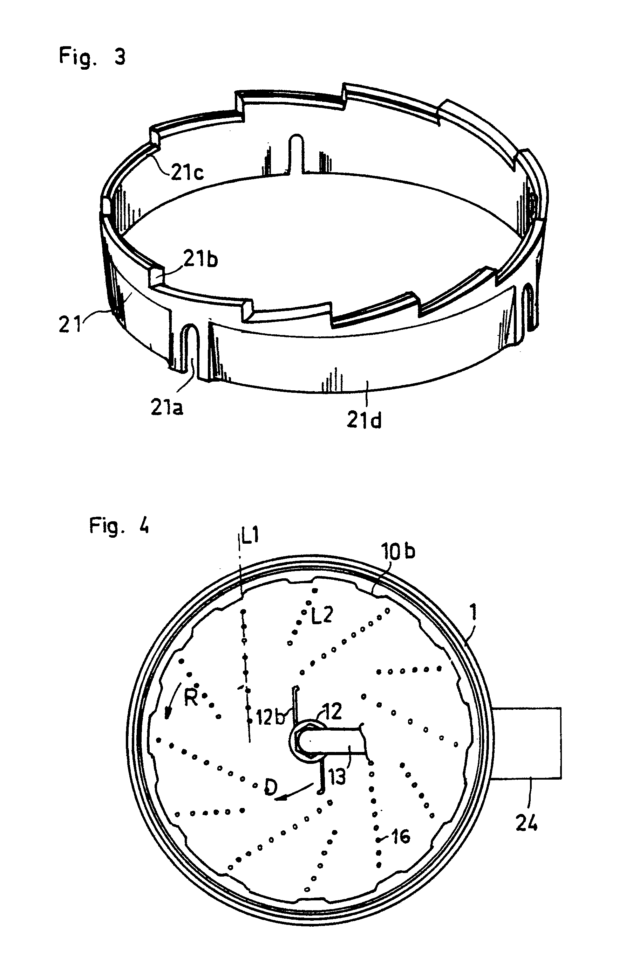

Pour chaque orifice, une ailette de guidage 12b prolonge radialement le distributeur 12 afin de diffuser le liquide dans une direction privilégiée D opposée au sens de rotation R du disque, comme le schématise la figure 4. A cet effet, les ailettes sont incurvées dans le sens opposé à ce sens de rotation R.

Par ailleurs, le disque 10 préserve au-delà de son rebord périphérique 10a, un passage 15 entre ledit rebord et la cuve 1, en vue de l'évacuation des déchets et du liquide.

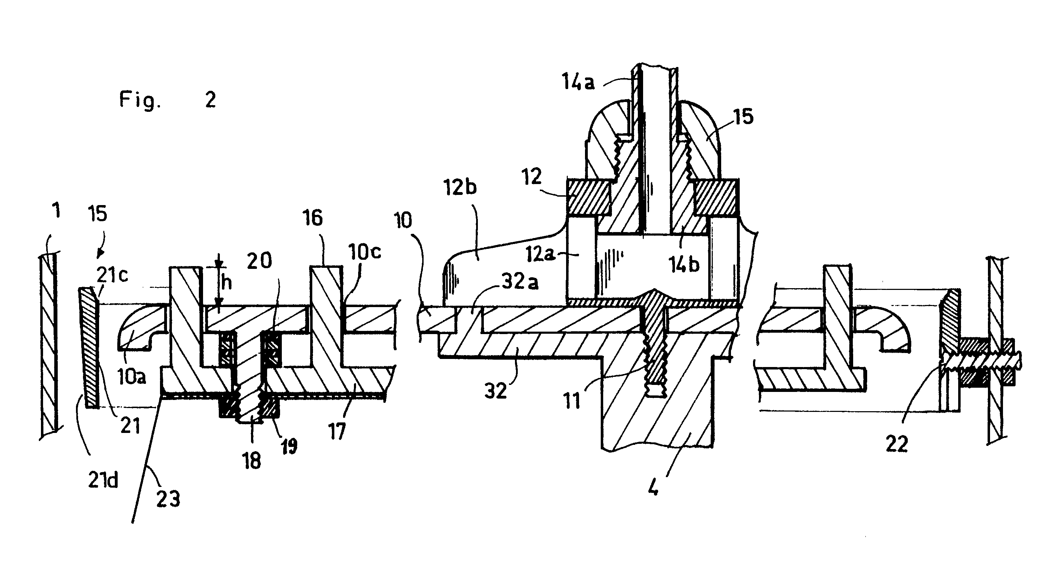

Pour faciliter l'évacuation desdits déchets, le disque possède un rebord périphérique recourbé vers le bas, comme l'illustre en 10a la figure 2 ; de plus, ce rebord est festonné sur son pourtour, comme l'illustre en 10b la figure 4.

Sur sa surface, le disque 10 est hérissé d'une pluralité de dents telles que 16 qui font saillie au-dessus de celui-ci à travers des lumières 10c pratiquées dans le disque.

Ces dents 16 sont portées par plusieurs supports tels que 17, disposés au-dessous du disque et qui permettent d'ajuster la hauteur -h- des dents en saillie.

En l'exemple, les dents sont réparties sur des

lignes $L_1$, $L_2$..., comme le représente la figure 4, et chaque ligne est portée par un support 17 constitué par une réglette fixée sous le disque 10 au moyen d'une vis 18 et d'un écrou 19. Des rondelles 20 en nombre réglable forment câles de positionnement desdites réglettes.

Comme le schématise la figure 4, les lignes de dents $L_1$, $L_2$... sont réparties autour du disque et orientées selon des directions angulairement décalées par rapport aux directions radiales dans le sens opposé à la rotation R du disque 10 de façon à imposer un mouvement spiralé aux denrées.

En l'exemple, des lignes plus longues telles que $L_1$ (correspondant à des supports 17 plus longs) sont intercalées avec des lignes plus courtes telles que $L_2$ (correspondant à des supports plus courts dotés d'un nombre de dents plus réduits).

Dans le cas visé de l'écalage de noix, les dents 16 d'une ligne sont de préférence espacées entre elles d'une distance de l'ordre de 2 cm, et le nombre de lignes de dents est avantageusement prévu entre 8 et 12.

Par ailleurs, dans le passage 15 d'évacuation des déchets, est disposée une bague circulaire 21 qui est schématisée en perspective à la figure 3. Cette bague est solidarisée à la cuve par trois vis telles que 22 munies d'écrous et logées dans des échancrures 21a de ladite bague. Un lamage externe est pratiqué dans ces échancrures de façon que les têtes fraisées des vis 22 ne dépassent pas.

De plus, la bague 21 possède une face supérieure qui est crantée sur son pourtour (crans schématisés en 21b à la figure 3) et qui est biseautée (chanfrein 21c) sur son bord interne orienté vers le disque 10. La bague 21 est positionnée de sorte que la base des crans 21b se trouve au niveau de la face supérieure du disque 10.

En outre, à l'exception des trois zones pourvues des échancrures 21a, la bague est évidée d'une partie de son épaisseur, dans la portion inférieure de sa face cylindrique externe (évidement schématisé en 21d à la figure 3).

Ces dispositions favorisent, d'une part, les mouvements centrifuges de remontée des noix contre la paroi lisse de la cuve, d'autre part, l'élimination des déchets et des éventuelles feuilles ou herbes mêlées aux noix traitées.

De plus, un racloir tel que 23 est fixé sous un ou plusieurs supports 17. Ce racloir est dimensionné de façon à affleurer le fond 2 et à repousser à chaque tour les déchets vers la goulotte 3. Ce racloir peut être fixé au moyen d'un retour à l'aide des mêmes vis et écrous (18, 19) qui servent à la fixation du support 17.

La machine ci-dessus décrite permet, pour un diamètre et une hauteur de cuve respectivement d'environ 57 cm et 65 cm, d'écaler 40 kilos de noix en une minute, c'est-à-dire de rogner intégralement la coque verte de celles-ci ; la consommation est de l'ordre de 45 litres par minute. Bien entendu, la machine peut être adaptée à d'autres types de denrées (fruits, tubercules...) en ajustant la vitesse de rotation du disque rotatif et les caractéristiques des dents (hauteur en saillie, éventuellement densité).

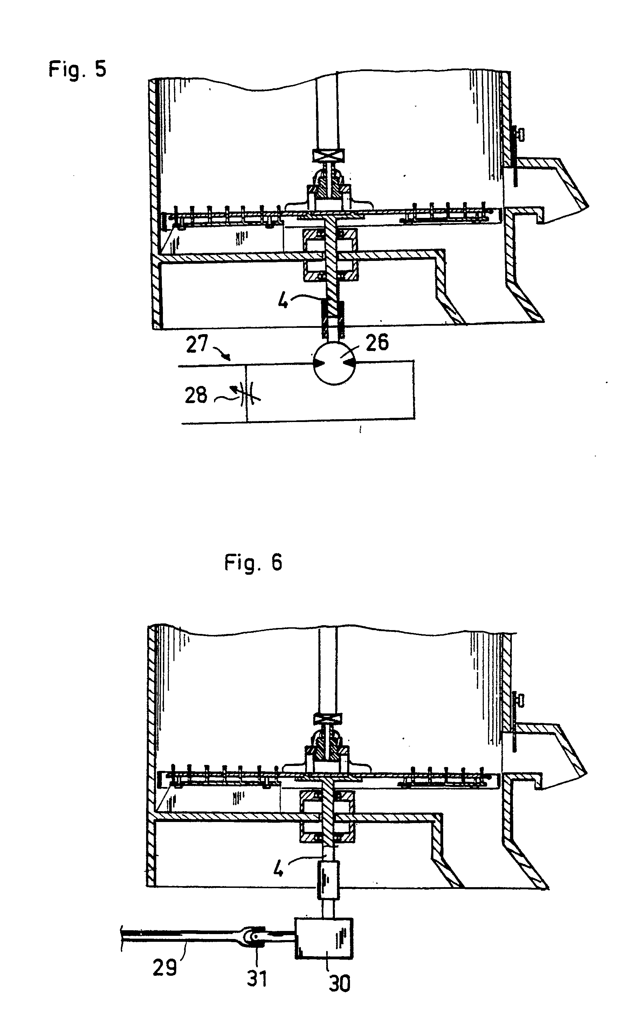

La figure 5 présente en coupe partielle schématique, une variante dans laquelle l'arbre 4 est entraîné par un moteur hydraulique 26 relié à un circuit hydraulique 27 lequel est appelé à être couplé à une prise hydraulique de tracteur. Un diviseur hydraulique réglable 28 permet d'ajuster la vitesse de rotation.

La figure 6 présente en coupe partielle schématique une autre variante dans laquelle l'arbre 4 est entraîné mécaniquement par un arbre de transmission homocinétique 29 appelé à être attelé à la prise de force d'un tracteur. La transmission comporte un boîtier de renvoi d'angle 30 et un joint de cardan 31.

## Revendications

1. Machine pour le traitement de denrées en vue de leur épluchage, comprenant une cuve (1), un disque rotatif (10) disposé vers le fond de celle-ci, des moyens (4-9) d'entraînement en rotation du disque, des moyens (12, 14) de distribution de liquide dans la cuve, des moyens (24) de récupération des denrées traitées et des moyens (2, 3, 15) d'évacuation des déchets et du liquide comprenant un passage (15) ménagé à la périphérie du disque entre celui-ci et la cuve, ladite machine étant caractérisée en ce que :
   - les moyens de distribution de liquide comprennent un distributeur (12) assujetti au centre du disque (10) de façon à tourner avec celui-ci, ce distributeur étant relié à un conduit d'arrivée de liquide (13) au moyen d'un joint hydraulique tournant (14), et étant doté d'orifices (12a) agencés pour projeter le liquide au niveau du disque dans le sens centrifuge,
   - le disque rotatif (10) est hérissé d'une pluralité de dents (16) faisant saillie par rapport audit disque et ajustables en hauteur au-dessus de celui-ci.

2. Machine selon la revendication 1, caractérisée en ce que le distributeur (12) comporte au moins deux orifices radiaux de distribution (12e) situés au-dessus du disque (10) à proximité de celui-ci et, pour chaque orifice, une ailette de guidage (12b) incurvée dans le sens opposé au sens de rotation (R) du disque en vue de diffuser le liquide dans une direction privilégiée opposée audit sens de rotation.

3. Machine selon la revendication 2, caractérisée en ce que le disque rotatif (10) est assemblé sur un plateau central (32) au moyen d'une vis (11) solidaire du distributeur (12) de façon que ledit disque se trouve pincé entre ledit plateau et ledit distributeur, la vis (11) étant vissée dans un arbre axial (4) d'entraînement relié par des moyens de transmission (6-8) à des moyens moteurs (9).

4. Machine selon la revendication 1, caractérisée en ce que les dents (16) sont agencées à travers des lumières (10c) du disque en position ajustable en hauteur, lesdites dents étant portées par des moyens de réglage (17-20), fixés au-dessous du disque (10) et adaptés pour permettre de régler la hauteur en saillie desdites dents au-dessus du disque.

5. Machine selon la revendication 4, caractérisée en ce que les moyens de réglage des dents comprennent des supports (17) portant chacun une ligne de dents ($L_1$, $L_2$...), des cales (20) de positionnement desdits supports et des moyens (18, 19) de fixation de ceux-ci au-dessous du disque (18).

6. Machine selon la revendication 5, caractérisée en ce que les lignes de dents ($L_1$, $L_2$...) sont réparties autour du disque (10) et orientées selon des directions (D) angulairement décalées par rapport aux directions radiales dans le sens opposé à la rotation (R) du disque, de façon à imposer un mouvement spiralé aux denrées.

7. Machine selon la revendication 6, caractérisée en ce qu'elle comprend des supports de dents plus longs, intercalés avec des supports plus courts, dotés d'un nombre de dents plus réduits.

8. Machine selon la revendication 1, caractérisée en ce que les moyens d'évacuation des déchets et du liquide comprennent :
   . au moins une bague circulaire (21) assujettie sur la cuve (1) au niveau du disque rotatif (10) dans le passage (15) ménagé entre ladite cuve et ledit disque,
   . un fond (2) s'étendant sur la section de la cuve au-dessous du disque (10),
   . et une goulotte d'évacuation (3) associée à une ouverture dudit fond.

9. Machine selon la revendication 8, caractérisée en ce que la bague circulaire (21) possède une face supérieure crantée (21b) sur son pourtour, et biseautée (21c) sur son bord interne orienté vers le disque (10).

10. Machine selon la revendication 8, caractérisée en ce que le disque rotatif (10) possède un rebord périphérique (10e) recourbé vers le bas et festonné sur son pourtour (10b) en vue de faciliter le dégagement des déchets.

11. Machine selon la revendication 8, comprenant des supports de dents fixés au-dessous du disque rotatif, caractérisée en ce qu'au moins un racleur (23) est fixé sur les supports de dents (17) de façon à affleurer le fond (2).

12. Machine selon la revendication 1, dans laquelle les moyens de récupération des denrées comprennent une porte letérale coulissante (25) montée sur la cuve (1) en face d'une ouverture (la) de celle-ci s'étendent eu-dessus du niveau du disque rotatif (10).

13. Machine selon la revendication 1 destinée à l'écalage des noix,. dans laquelle les moyens d'entraînement sont adaptés pour pouvoir entraîner le disque rotatif (10) à une vitesse de rotation comprise entre 250 et 400 tours par minute.

**Claims**

1. Device for the treatment of foodstuffs with a view to peeling them, comprising a vessel (1), a rotary disc (10) arranged near the bottom of the latter, means (4-9) for rotary driving of the disc, means (12, 14) for distributing liquid within the vessel, means (24) for recovering treated foodstuffs and means (2, 3, 15) for evacuating waste and liquid, comprising a passage (15) arranged at the periphery of the disc between the latter and the vessel, said device being characterised in that :
   - the means for distributing liquid comprise a distributor (12) connected with the centre of disc (10) in such a way as to rotate together with the latter, this distributor being joined to a liquid-inflow pipe (13) by means of a rotary hydraulic joint (14) and endowed with openings (12a) so designed as to project, at the level of the disc, the liquid in the centrifugal direction,
   - rotary disc (10) is provided with a plurality of teeth (16) projecting in relation to said disc and adjustable in height above the latter.

2. Device according to claim 1, characterised in that distributor (12) comprises at least two radial distribution openings (12a) located above disc (10) in the proximity of the latter and, for every opening, a guide rib (12b) curving in the direction opposite to the direction of rotation (R) of the disc, with a view to diffusing the liquid in a preferred direction opposite to said direction of rotation.

3. Device according to claim 2, characterised in that rotary disc (10) is secured on a central plate (32) by means of a screw (11) integral with distributor (12), so that said disc is clamped between said plate and said distributor, screw (11) being threaded within an axial drive shaft (4) linked via transmission means (6-8) with motor means (9).

4. Device according to claim 1, characterised in that the teeth (16) are arranged so as to extend through openings (10c) in the disc in a position adjustable in height, said teeth being mounted on regulating means (17-20), secured below disc (10) and so designed as to enable the height by which said teeth project above the disc to be regulated.

5. Device according to claim 4, characterised in that the tooth-regulating means comprise carriers (17), each carrying a row of teeth ($L_1$, $L_2$...), inserts (20) for positioning said carriers and means (18, 19) for securing the latter on the underside of disc (10).

6. Device according to claim 5, characterised in that the rows of teeth ($L_1$, $L_2$...) are distributed about disc (10) and orientated in directions (D) angularly offset in relation to the radial directions, in the sense opposite to that in which the disc rotates (R), so as to impart a spiralling movement to the foodstuffs.

7. Device according to claim 6, characterised in that it comprises tooth carriers of greater length interspersed with carriers of lesser length, endowed with a smaller number of teeth.

8. Device according to claim 1, characterised in that the means for evacuating waste and liquid comprise :
   . at least one circular ring (21) secured to vessel (1) at the level of rotary disc (10) within passage (15) provided between said vessel and said disc,
   . a base (2) extending throughout the section of the vessel below disc (10),
   . and a discharge chute (3) associated with an opening in said base.

9. Device according to claim 8, characterised in that circular ring (21) has on its periphery a serrated upper face (21b), which is chamfered (21c) on its inner edge facing disc (10).

10. Device according to claim 8, characterised in that rotary disc (10) has a peripheral edge (10a) curving downward and scalloped along its circumference (10b), with a view to facilitating discharge of the waste.

11. Device according to claim 8 comprising tooth carriers secured below the rotary disc, characterised in that at least one scraper (23) is secured to tooth-carriers (17) with a view to levelling base (2).

12. Device according to claim 1, in which the means for recovering foodstuffs comprise a lateral slide door (25) mounted on vessel (1) opposite an opening (1a) in the latter, extending above the level of rotary disc (10).

13. Device according to claim 1 for peeling nuts, in which the driving means are so designed as to be capable of driving rotary disc (10) at a rotary speed comprised between 250 and 400 revolutions per minute.

**Patentansprüche**

1. Vorrichtung zum Behandeln von Lebensmitteln, um diese zu schälen, umfassend ein Gefäß (1), eine im Bereich von dessen Boden angeordnete Drehscheibe (10), Mittel (4-9) zu drehendem Antrieb der Scheibe, Mittel (12, 14) zur Verteilung von Flüssigkeit in dem Gefäß, Mittel (24) zur Entnahme der behandelten Lebensmittel und Mittel (2, 3, 15) zum Entleeren der Abfälle und der Flüssigkeit, umfassend einen Durchgang (15) am Umfang der Scheibe zwischen der besagten Scheibe und dem Gefäß, wobei die besagte Vorrichtung dadurch gekennzeichnet ist,
   - daß die Mittel zur Verteilung von Flüssigkeit einen mit der Mitte der Scheibe (10) in Verbindung stehenden Verteiler (12) umfassen, so daß sie sich mit dieser gemeinsam drehen, wobei der besagte Verteiler mittels eines hydraulischen Drehverbinders (14) mit einem Flüssigkeitseinlaufrohr (13) verbunden und mit Öffnungen (12a) versehen ist, die so beschaffen sind, daß sie die Flüssigkeit auf Höhe der Scheibe im Zentrifugalsinne schleudern,
- daß Drehscheibe (10) mit einer Vielzahl von Zähnen (16) bestückt ist, die im Verhältnis zu der besagten Scheibe vorstehen und ihrer Höhe nach oberhalb der besagten Scheibe verstellbar sind.

2. Vorrichtung nach Anspruch 1, dadurch gekennzeichnet, daß Verteiler (12) oberhalb Scheibe (10) und in deren Nähe mindestens zwei radiale Verteilöffnungen (12a) umfaßt, sowie, für jede Öffnung, eine Führungsrippe (12b), die in der zu der Drehrichtung (R) der Scheibe entgegengesetzten Richtung gekrümmt ist, um die Flüssigkeit in einer der besagten Drehrichtung entgegengesetzten bevorzugten Richtung zu diffundieren.

3. Vorrichtung nach Anspruch 2, dadurch gekennzeichnet, daß Drehscheibe (10) mit Hilfe einer mit Verteiler (12) fest verbundenen Schraube (11) an einer Mittelplatte (32) montiert ist, so daß die besagte Scheibe zwischen der besagten Platte und dem besagten Verteiler eingeklemmt ist, wobei Schraube (11) in eine axiale Antriebswelle (4) eingedreht ist, die mit Hilfe von Übertragungsmitteln (6-8) mit Antriebsmitteln (9) verbunden ist.

4. Vorrichtung nach Anspruch 1, dadurch gekennzeichnet, daß die Zähne (16) durch Öffnungen (10c) in der Scheibe, und zwar in der Höhe nach einstellbarer Lage, verlaufen, wobei die besagten Zähne auf unterhalb der Scheibe (10) angebrachten Regelmitteln (17-20) angeordnet und so beschaffen sind, daß sie Regelung der Höhe, um die die besagten Zähne oberhalb der Scheibe vorstehen, gestatten.

5. Vorrichtung nach Anspruch 4, dadurch gekennzeichnet, daß die Zahnregelmittel Träger (17) umfassen, von denen jeder eine Reihe von Zähnen (L₁, L₂ ...), Einlagen (20) zum Positionieren der besagten Träger und Mittel (18, 19) zu deren Befestigung unterhalb der Scheibe (10) besitzen.

6. Vorrichtung nach Anspruch 5, dadurch gekennzeichnet, daß die Zahnreihen (L₁, L₂...) rings um Scheibe (10) verteilt und in im Verhältnis zu den Radialrichtungen winkelig versetzten Richtungen (D) angeordnet sind, und zwar in der zur Drehrichtung (R) der Scheibe entgegengesetzter Richtung, um den Lebensmitteln eine spiralige Bewegung zu verleihen.

7. Vorrichtung nach Anspruch 6, dadurch gekennzeichnet, daß sie längere Zahnträger umfaßt, zwischen denen sich kürzere Träger mit einer geringeren Anzahl Zähne befinden.

8. Vorrichtung nach Anspruch 1, dadurch gekennzeichnet, daß die Mittel zum Entleeren der Abfälle und der Flüssigkeit folgende Teile umfassen :
   . mindestens einen kreisförmigen Ring (21), der in Höhe der Drehscheibe (10) innerhalb des Durchgangs (15) zwischen dem besagten Gefäß und der besagten Scheibe mit Gefäß (1) in Verbindung steht,
   . einen Boden (2), der sich über den Querschnitt des Gefäßes unterhalb der Scheibe (10) erstreckt,
   . und einen Ablaßkanal(3), der mit einer Öffnung in dem besagten Boden in Verbindung steht.

9. Vorrichtung nach Anspruch 8, dadurch gekennzeichnet, daß der kreisförmige Ring (21) an seinem Umfang eine kerbverzahnte obere Fläche (21b) besitzt, die an seinem auf die Scheibe (10) zu gerichteten Innenrand angefast (21c) ist.

10. Vorrichtung nach Anspruch 8, dadurch gekennzeichnet, daß Drehscheibe (10) einen peripheren Rand (10a) besitzt, der nach unten gebogen und an seinem Umfang (10b) ausgebogt ist, um die Abgabe der Abfälle zu erleichtern.

11. Vorrichtung nachAnspruch 8, umfassend an der Unterseite der Drehscheibe angebrachte Zahnträger, dadurch gekennzeichnet, daß mindestens ein Schaber (23) an den Zahnträgern (17) angebracht ist, um den Boden (2) zu ebnen.

12. Vorrichtung nach Anspruch 1, bei der die Mittel zur Entnahme der Lebensmittel eine seitliche Schiebetür (25) umfassen, die an Gefäß (1) gegenüber einer an diesem vorgesehenen Öffnung (1a) angeordnet ist und sich oberhalb der besagten Drehscheibe (10) erstreckt.

13. Vorrichtung nach Anspruch 1 zum Schälen von Nüssen, bei der die Antriebsmittel so beschaffen sind, daß sie die Drehscheibe (10) mit einer Drehzahl zwischen 250 und 400 Umdrehungen pro Minute antreiben können.

Fig. 1

EP 0 230 331 B1

Fig. 2

Fig. 3

Fig. 4

Fig. 5

Fig. 6